# EUROPÄISCHE PATENTANMELDUNG

(11) **EP 1 081 297 A2**
(43) Veröffentlichungstag der Anmeldung: **07.03.2001**
(21) Anmeldenummer: 00118454.8
(22) Anmeldetag: 25.08.2000
(51) Int. Cl.: E03C 1/04, F16L 37/04, F16L 37/00, F16L 37/06, F16K 11/00

(54) **Wasserarmatur mit Anschlussverbindung**

(30) Priorität: 01.09.1999 DE 19941492
(71) Anmelder: Friedrich Grohe AG & Co. KG, 58675 Hemer (DE)
(72) Erfinder: Rüth, Andreas, 58675 Hemer (DE); Keiter, Dieter, 58708 Menden (DE)

(57) **Zusammenfassung**

Bei einer Wasserarmatur mit einem wenigstens eine Anschlussöffnung (11) für den Wasserzulauf und wenigstens eine Wasserauslassöffnung aufweisenden Gehäuse (1), wobei jeweils in der Anschlussöffnung (11) ein metallenes Endstück (2) einer Leitung mit jeweils wenigstens einem O-Ring (21) gedichtet und mit einem an einem Axialsicherungselement anliegenden Bund (20) in der Stecklage gehalten ist, ist zur Verbesserung vorgeschlagen, dass der Bund (20) mit einer Stirnfläche an einer Kegelscheibe (4) anliegt, die einerseits von einem auf das Endstück (2) aufschiebbaren, in der Stecklage in der Anschlussöffnung (11) lösbar zu verrastenden Clip-Ring (3) abgestützt ist, wobei die Kegelscheibe (4) so ausgebildet ist, dass sie sich bei einer bestimmten Axialbelastung elastisch federnd, von einer kegeligen in eine plane Form ändert und gegen die Wandung der Anschlussöffnung (11) gespreizt wird.

## Beschreibung

Die Erfindung betrifft eine Wasserarmatur, insbesondere Einlochmischbatterie für Wasch- und/oder Spültische od. dgl., mit einem wenigstens eine Anschlussöffnung für den Wasserzulauf und wenigstens eine Wasserauslassöffnung aufweisenden Gehäuse, wobei jeweils in der Anschlussöffnung ein metallenes Endstück einer Leitung mit jeweils wenigstens einem O-Ring gedichtet und mit einem an einem Axialsicherungselement anliegenden Bund in der Stecklage gehalten ist.
Eine Wasserarmatur dieser Gattung ist aus der deutschen Offenlegungsschrift 23 04 658 bekannt. Bei dieser Wasserarmatur ist je eine Leitung für Kaltwasser und für Warmwasser parallel in einem durch eine Öffnung in einem Waschtisch hindurchreichenden Sockel ausgebildete Anschlussöffnungen gedichtet eingeführt. Dabei ist für die axiale Sicherung eine mit Durchgangsbohrungen für die beiden Leitungen ausgestattete Platte vorgesehen, die mit dem Sockel am vorstehenden Bereich verschraubbar ist. Der Verschraubvorgang und die Mittel hierzu sind jedoch relativ aufwendig. Darüber hinaus werden zunehmend aus Kosten- und Materialersparnisgründen Wasserarmaturen ohne Gehäusesockel eingesetzt, bei denen lediglich ein Spannbolzen durch die Waschtischöffnung hindurchgreift und die Leitungen in den Armaturenkörper oberhalb des Waschtisches geführt werden. Bei diesen Armaturen kann es insbesondere aus Platzgründen problematisch sein, die bekannte Platte zur axialen Fixierung der Leitungen vorzusehen.

Der Erfindung liegt die Aufgabe zugrunde, für eine Wasserarmatur eine verbesserte Anschlussverbindung vorzuschlagen, die insbesondere kostengünstig realisierbar ist, wenig Platz benötigt und die auch z. B. durch Wasserschlag verursachten hohen Druckstössen standhält.

Diese Aufgabe wird erfindungsgemäss dadurch gelöst, dass der Bund mit einer Stirnfläche an einer Kegelscheibe anliegt, die andererseits von einem auf das Endstück aufschiebbaren, in der Stecklage in der Anschlussöffnung lösbar zu verrastenden Clip-Ring abgestützt ist, wobei die Kegelscheibe so ausgebildet ist, dass sie sich bei einer bestimmten axialen Belastung elastisch federnd von einer kegeligen in eine plane Form ändert und gegen die Wandung der Anschlussöffnung gespreizt wird.
Weitere Ausgestaltungen der Erfindung sind in den Ansprüchen 2 bis 11 angegeben.

Mit den vorgeschlagenen Massnahmen wird einerseits eine lösbare platzsparende Steckverbindung geschaffen, die andererseits mit Hilfe der federelastisch umformbaren Kegelscheibe hohe Axialkräfte sicher aufnehmen kann. Die erfindungsgemässe Steckverbindung ist daher insbesondere für den sicheren Anschluss von flexiblen Zulaufanschlussleitungen, wie beispielsweise Druckschläuche, geeignet. Selbstverständlich ist die Steckverbindung ebenfalls bei Cu-Rohren mit angeformtem Bund vorteilhaft, insbesondere dann, wenn bauseitig erforderliche Verlängerungselemente, vorzugsweise flexible Anschlussstücke, eingesetzt werden.
Ausführungsbeispiele der Erfindung sind in der Zeichnung dargestellt und werden im folgenden näher beschrieben. Es zeigt
- Fig. 1: einen Teil einer Wasserarmatur im Längsschnitt;
- Fig. 2: eine in Fig. 1 gezeigte Anschlussverbindung in vergrösserter Darstellung mit einer elastisch federnden Kegelscheibe in entspanntem Zustand;
- Fig. 3: die in Fig. 2 gezeigte Anschlussverbindung mit der Kegelscheibe, die durch eine Axialbewegung elastisch in eine Planscheibe umgeformt ist, wobei der Aussenrand der Scheibe in eine Wandung einer Aufnahmebohrung einschneidet;
- Fig. 4: die in Fig. 2 gezeigte Kegelscheibe in der Schnittebene IV der Fig. 5;
- Fig. 5: die in Fig. 4 gezeigte Kegelscheibe in Draufsicht;
- Fig. 6: ein anderes Ausführungsbeispiel der Anschlussverbindung mit einem gelösten Clip-Ring;
- Fig. 7: die in Fig. 6 gezeigte Anschlussverbindung mit eingerastetem Clip-Ring, wobei die Kegelscheibe von dem Clip-Ring elastisch in eine Planscheibe umgeformt ist und die Scheibe mit ihrem Aussenrand in die Wandung einer Aufnahmebohrung einschneidet;
- Fig. 8: ein anderes Ausführungsbeispiel der Anschlussverbindung mit einer elastisch federnden Kegelscheibe in entspanntem Zustand;
- Fig. 9: die in Fig. 8 gezeigte Anschlussverbindung mit der Kegelscheibe, die durch eine Axialbewegung elastisch in eine Planscheibe umgeformt ist, wobei der Aussenrand der Scheibe in eine Wandung der Aufnahmebohrung einschneidet.

Der Einfachheit halber sind bei den Ausführungsbeispielen in der Zeichnung gleiche oder entsprechende Elemente mit jeweils gleichen Bezugszeichen versehen.

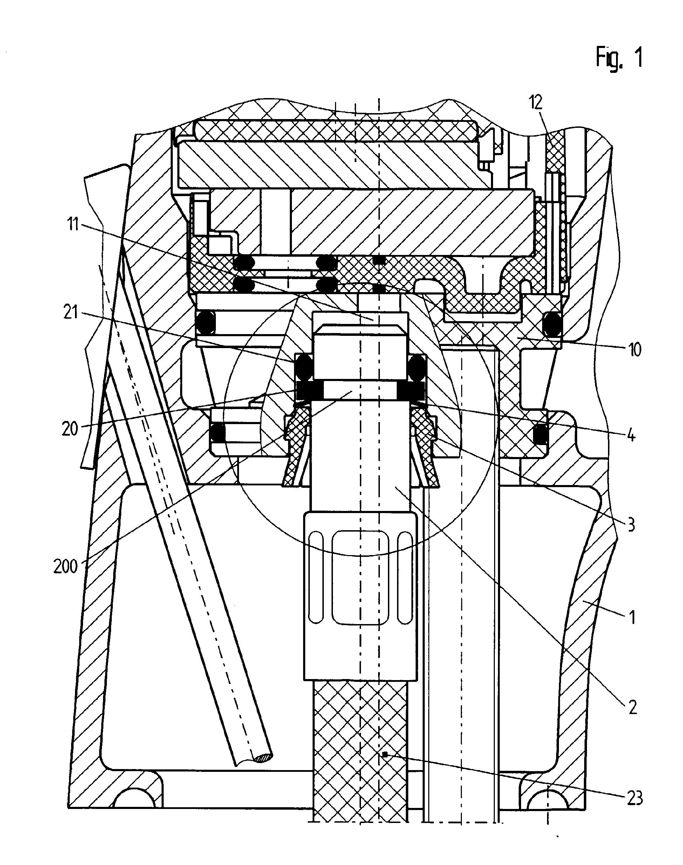

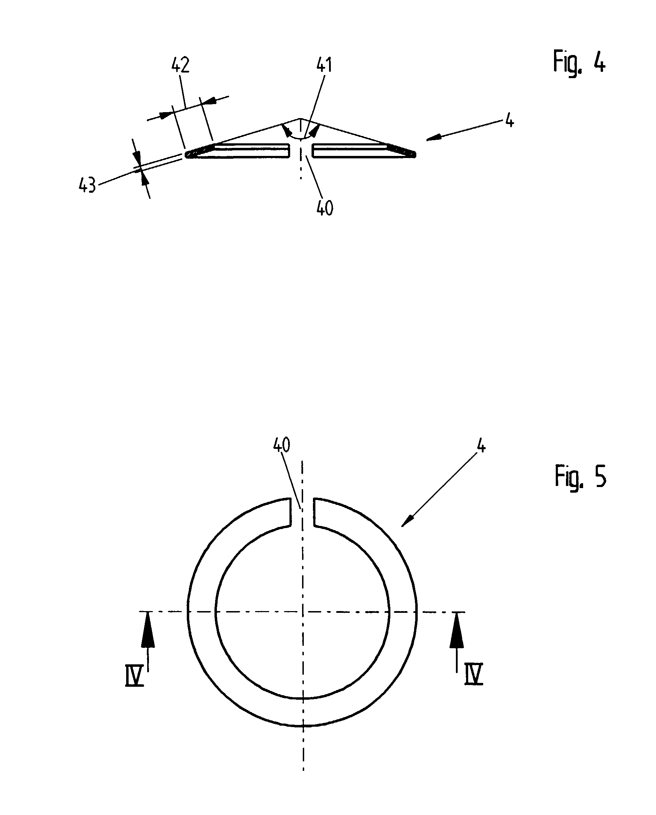

Bei dem in Fig. 1 bis 5 gezeigten Ausführungsbeispiel ist eine Wasserarmatur in Form einer Einlochwassermischarmatur zum Teil dargestellt, wobei in einem Gehäuse 1 ein Einsatz 10 aus Kunststoff eingebracht ist, der von einer zum Teil dargestellten Mischventilkartusche 12 in der Stecklage gehalten wird. In dem Einsatz 10 sind zwei hintereinander angeordnete Einlassöffnungen - in der Zeichnungsebene ist lediglich eine Einlassöffnung sichtbar - vorgesehen.
In jeweils eine Anschlussöffnung 11 ist eine Schlauchleitung 23 mit einem Endstück 2 gedichtet einzuführen und in der Stecklage verriegelbar, wobei über eine erste Schlauchleitung 23 Kaltwasser und über eine weitere Schlauchleitung 23 Warmwasser der Mischventilkartusche 12 zugeführt wird, in der in bekannter Weise temperiertes Mischwasser erzeugt und dosiert über einen in der Zeichnung nicht dargestellten Wasserauslauf abgegeben werden kann.
Zur Verriegelung des Endstücks 2 in der Stecklage ist zunächst auf dem Endstück 2 ein Clip-Ring 3 aus Kunststoff angeordnet, der in der Stecklage mit an federnden Zungen ausgebildeten Vorsprüngen in der Anschlussöffnung 11 verrastbar ist. An einer umlaufenden Stirnseite 31 des Clip-Rings 3 ist eine Kegelscheibe 4 angelagert. An der gegenüberliegenden Stirnseite der Kegelscheibe 4 ist in einer Ringnut 200 ein als Sprengring ausgebildeter Bund 20 angeordnet. An der gegenüberliegenden Seite des Bundes 20 ist ein O-Ring 21 auf das Endstück 2 aufgestreift. Das Endstück 2, der Bund 20 und die Kegelscheibe 4 sind aus Metall hergestellt, beispielsweise aus Edelstahl.

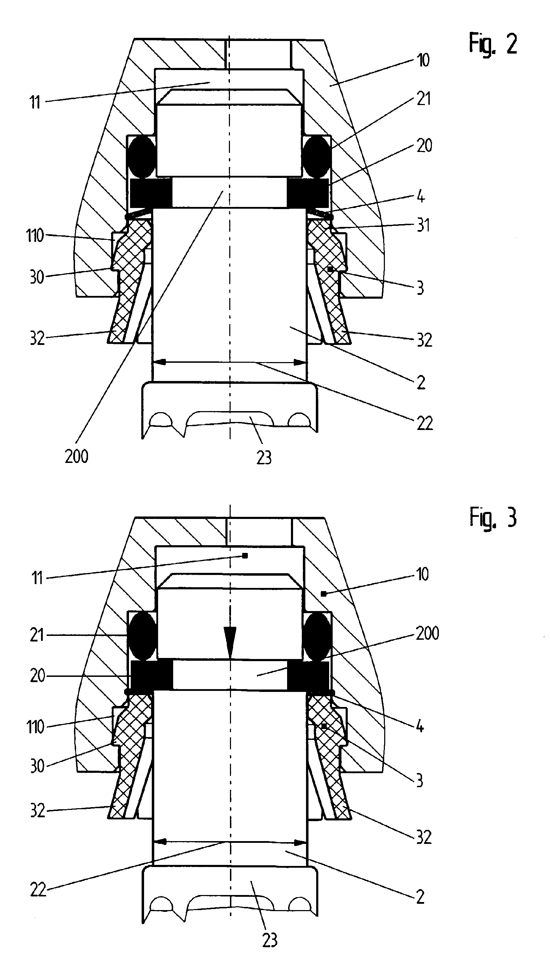

Zur Herstellung der Anschlussverbindung wird nun das Endstück mit dem O-Ring 21, dem Bund 20, der Kegelscheibe 4, deren Kegelspitze in Einsteckrichtung zeigt, und dem Clip-Ring 3 in die Aufnahmebohrung 11 eingeführt, wobei der O-Ring 21 dichtend zwischen dem Aussenmantel des Endstücks 2 der Wandung der Anschlussöffnung 21 zur Anlage gelangt. Der Clip-Ring 3 kann nun mit seinen federelastisch angeordneten Vorsprüngen 30 in eine Ausnehmung 110 in der Anschlussöffnung 11 des Einsatzes 10 eingesprengt werden, wodurch eine erste axiale Sicherung der Steckverbindung hergestellt wird, wie es insbesondere aus Fig. 1 und Fig. 2 ersichtlich ist.
Wird nun die Schlauchleitung 23 vom Wasserleitungsdruck beaufschlagt, so bewirkt der anstehende Wasserdruck, dass das Endstück 2 entgegen der Federkraft der Kegelscheibe 4 aus der Anschlussöffnung 11 herausgedrückt wird, wobei der Clip-Ring 3 als Widerlager wirkt. Hierbei wird die Kegelform der Kegelscheibe 4 federelastisch in eine Planform umgewandelt, wobei die Kegelscheibe 4 von der Aussenwandung des Endstücks 2 abgestützt wird, wie es aus Fig. 3 der Zeichnung zu entnehmen ist. Dabei wird die Kegelscheibe 4 radial gespreizt, wobei die umlaufende Stirnseite der Kegelscheibe 4 in die Wandung der Anschlussöffnung 11 des aus Kunststoff hergestellten Einsatzes 10 einschneidet und eine zusätzliche Axialsicherung bildet, mit der sicher auch von Wasserschlägen verursachte hohe Druckstösse aufgenommen werden können.
Wird dagegen die Schlauchleitung 23 vom Wasserleitungsdruck entlastet, so kehrt die Kegelscheibe 4 von der planen Form in die kegelige Form, wie sie in Fig. 2 dargestellt ist, federelastisch zurück. In dieser Stellung können die Vorsprünge 30 mit Hilfe von Betätigungsarmen 32 aus der Ausnehmung 110 ausgelenkt werden, so dass das Endstück 2 mit dem Bund 20, der Kegelscheibe 4 und dem Clip-Ring 3 aus der Anschlussöffnung 11 zur Lösung der Anschlussverbindung herausgezogen werden kann.

Bei der Anschlussverbindung hat sich eine Kegelscheibe 4 als günstig erwiesen, wenn sie eine Ringbreite 42 aufweist, die etwa einem Sechstel des Aussendurchmessers 22 des Endstücks 2 entspricht, wobei eine Ringdikke 43 von etwa einem Sechstel der Ringbreite 42 zweckmässig ist.
Die Kegelscheibe 4 kann im entspannten Zustand einen Kegelwinkel 41 von 90° bis 160°, vorzugsweise 145°, aufweisen. Damit eine relativ leichtgängige Umwandlung von der kegeligen in eine plane Form und umgekehrt erfolgen kann, ist die Kegelscheibe 4 mit einem Schlitz 40 versehen. Darüber hinaus ist die Kegelscheibe 4 aus nichtrostendem Federstahl oder einem ähnlichen Werkstoff hergestellt, um Korrosion im Bereich der Scheibe auszuschliessen.

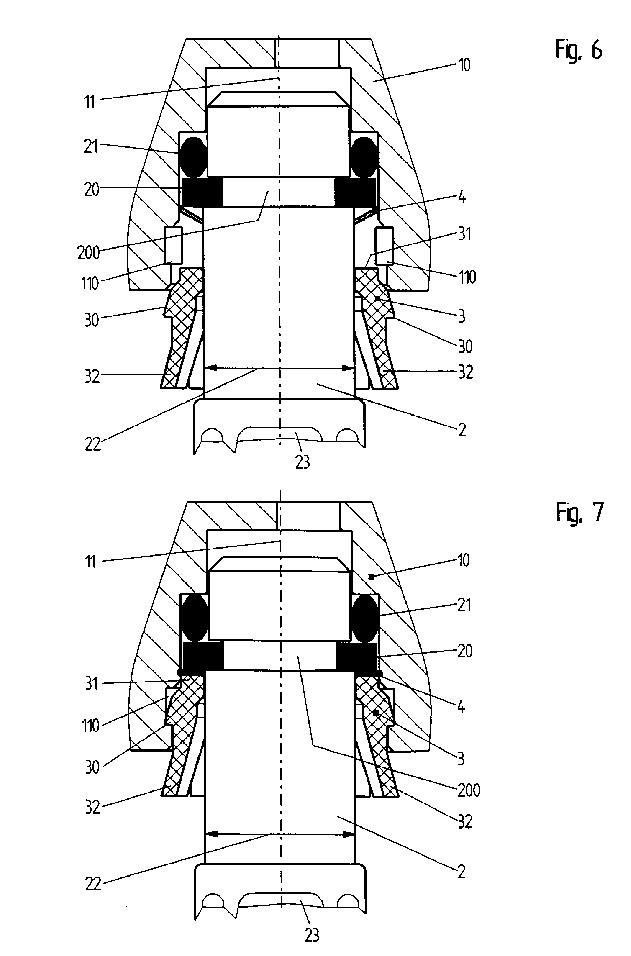

Im Gegensatz zu dem vorstehend beschriebenen Ausführungsbeispiel ist bei der in Fig. 6 und 7 gezeigten Anschlussverbindung die Kegelscheibe in umgekehrter Weise angeordnet, d. h., die Kegelspitze der Kegelscheibe 4 ist der Einsteckrichtung entgegengerichtet. In Fig. 6 ist das Endstück 2 der Schlauchleitung 23 mit dem O-Ring 21 und dem Bund 20 in die Anschlussöffnung 11 eingeführt gezeigt, wobei der Clip-Ring 3 sich im wesentlichen vor der Anschlussöffnung 11 befindet. Die Kegelscheibe 4 ist im entspannten Zustand vor dem Bund 20 angeordnet.
Die Anschlussöffnung 11 und/oder der Clip-Ring 3 sind hierbei derart bemessen, dass bei einem Einschieben des Clip-Rings 3 in seine Rastposition in der Anschlussöffnung 11 die Kegelscheibe 4 in ihre plane gespreizte Form gedrückt wird, wie es aus Fig. 7 zu entnehmen ist. Mit dieser Einrichtung wird erreicht, dass unabhängig vom anstehenden Wasserleitungsdruck die Kegelscheibe 4 allein vom Clip-Ring 3 in die gespreizte Verriegelungsposition gebracht wird.
Bei einer Lösung der Anschlussverbindung wird der Clip-Ring 3 aus seiner Rastposition in der Anschlussöffnung 11 herausgenommen, wobei die Kegelscheibe 4 von der gespreizten Stellung wieder in ihre entspannte kegelige Form zurückkehrt, wie es aus Fig. 6 zu entnehmen ist.

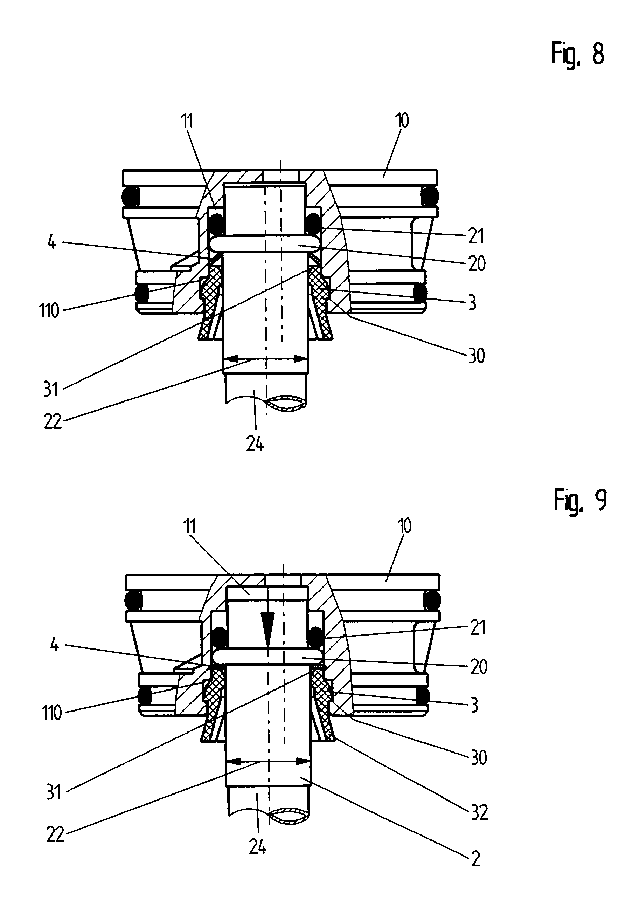

Das in Fig. 8 und 9 der Zeichnung dargestellte Ausführungsbeispiel einer weiteren Anschlussverbindung unterscheidet sich zu dem in Figur 1 bis 5 gezeigten lediglich dadurch, dass als Anschlussleitungen Kupferrohre 24 vorgesehen sind. Bei Cu-Rohren 24 kann der Bund 20 kostengünstig einstückig an dem Endstück 2, z.B. durch einen Stauchvorgang, angeformt werden.
Selbstverständlich kann auch bei der einstückigen Ausbildung von Endstück 2 und Bund 20 die Kegelscheibe 4 mit ihrer Kegelspitze entgegen der Einsteckrichtung angeordnet werden, wobei dann jedoch die Anschlussöffnung 11 und/oder der Clip-Ring 3 derart zu bemessen ist, wie es aus Fig. 7 der Zeichnung zu entnehmen ist.

Bei den vorstehend beschriebenen Ausführungsbeispielen ist der Einsatz 10, in dem die Anschlussöffnungen 11 ausgebildet sind, aus Kunststoff hergestellt. Selbstverständlich kann die Anschlussöffnung auch in einem metallenen Gehäuse od. dgl. vorgesehen werden, wobei dann die Kegelscheibe 4 mit dem Spreizvorgang gegen die Wandung der Anschlussöffnung 11 gepresst wird, so dass dadurch mittels Reibschluss die Steckverbindung gegen ein unzulässiges Lösen gesichert wird.

## Patentansprüche

1. Wasserarmatur, insbesondere Einlochmischbatterie für Wasch- und/oder Spültische od. dgl., mit einem wenigstens eine Anschlussöffnung (11) für den Wasserzulauf und wenigstens eine Wasserauslassöffnung aufweisenden Gehäuse (1), wobei jeweils in der Anschlussöffnung (11) ein metallenes Endstück (2) einer Leitung mit jeweils wenigstens einem O-Ring (21) gedichtet und mit einem an einem Axialsicherungselement anliegenden Bund (20) in der Stecklage gehalten ist, dadurch gekennzeichnet, dass der Bund (20) mit einer Stirnfläche an einer Kegelscheibe (4) anliegt, die andererseits von einem auf das Endstück (2) aufschiebbaren, in der Stecklage in der Anschlussöffnung (11) lösbar zu verrastenden Clip-Ring (3) abgestützt ist, wobei die Kegelscheibe (4) so ausgebildet ist, dass sie sich bei einer bestimmten Axialbelastung elastisch federnd von einer kegeligen in eine plane Form ändert und gegen die Wandung der Anschlussöffnung (11) gespreizt wird.

2. Wasserarmatur nach Anspruch 1, dadurch gekennzeichnet, dass die Kegelscheibe (4) einen Schlitz (40) aufweist.

3. Wasserarmatur nach Anspruch 1 oder 2, dadurch gekennzeichnet, dass die Kegelscheibe (4) beim Spreizvorgang von der Aussenwandung des Endstücks (2) abgestützt ist.

4. Wasserarmatur nach einem der Ansprüche 1 bis 3, dadurch gekennzeichnet, dass die Kegelscheibe (4) aus nichtrostendem Federstahl hergestellt ist.

5. Wasserarmatur nach wenigstens einem der Ansprüche 1 bis 4, dadurch gekennzeichnet, dass die Kegelscheibe (4) im entspannten Zustand einen Kegelwinkel (41) von 90° bis 160°, vorzugsweise 145°, aufweist.

6. Wasserarmatur nach wenigstens einem der Ansprüche 1 bis 5, dadurch gekennzeichnet, dass die Kegelscheibe (4) eine maximale Ringbreite (42) hat, die etwa ein Sechstel des Aussendurchmessers (22) des Endstücks (2) beträgt, wobei die Ringdicke (43) etwa ein Sechstel der Ringbreite (42) aufweist.

7. Wasserarmatur nach wenigstens einem der Ansprüche 1 bis 6, dadurch gekennzeichnet, dass ein in das Gehäuse (1) einfügbarer Einsatz (10) aus Kunststoff vorgesehen ist, in dem ein oder mehrere Anschlussöffnungen (11) ausgebildet sind, wobei jeweils die Kegelscheibe (4) in ihrer Spreizstellung mit ihrem Aussenrand in die Wandung der Anschlussöffnung (11) einschneidet.

8. Wasserarmatur nach wenigstens einem der Ansprüche 1 bis 7, dadurch gekennzeichnet, dass die Kegelscheibe (4) in der Anschlussöffnung (11) so angeordnet ist, dass die Kegelspitze in die Einsteckrichtung zeigt.

9. Wasserarmatur nach wenigstens einem der Ansprüche 1 bis 7, dadurch gekennzeichnet, dass die Kegelscheibe (4) in der Anschlussöffnung (11) so angeordnet ist, dass die Kegelspitze entgegen der Einsteckrichtung zeigt.

10. Wasserarmatur nach wenigstens einem der Ansprüche 1 bis 9, dadurch gekennzeichnet, dass das Endstück (2) eine Ringnut (200) aufweist, in die der Bund (20) einsprengbar ist.

11. Wasserarmatur nach wenigstens einem der Ansprüche 1 bis 10, dadurch gekennzeichnet, dass das Endstück (2) mit einer Schlauchleitung (23) verbunden ist.
